(19) Europäisches Patentamt
European Patent Office
Office européen des brevets

(11) EP 3 840 962 B1

(12) FASCICULE DE BREVET EUROPEEN

(45) Date de publication et mention de la délivrance du brevet:
**04.10.2023 Bulletin 2023/40**

(21) Numéro de dépôt: **19752512.4**

(22) Date de dépôt: **13.08.2019**

(51) Classification Internationale des Brevets (IPC):
***B60C 1/00*** *(2006.01)* ***C08K 3/04*** *(2006.01)*
***C08K 5/11*** *(2006.01)* ***C08K 5/14*** *(2006.01)*

(52) Classification Coopérative des Brevets (CPC):
(C-Sets disponibles)
**B60C 1/00; B60C 1/0016; C08K 3/04; C08K 5/11; C08K 5/14** (Cont.)

(86) Numéro de dépôt international:
**PCT/EP2019/071646**

(87) Numéro de publication internationale:
**WO 2020/038762 (27.02.2020 Gazette 2020/09)**

# (54) PNEUMATIQUE MUNI D'UNE COMPOSITION COMPRÉNANT UN ÉLASTOMÈRE RICHE EN ÉTHYLÈNE, UN PEROXYDE ET UN DÉRIVÉ D'ACRYLATE SPÉCIFIQUE

REIFEN MIT EINER ZUSAMMENSETZUNG MIT EINEM ETHYLENREICHEN ELASTOMER, EINEM PEROXID UND EINEM SPEZIFISCHEN ACRYLATDERIVAT

TYRE HAVING A COMPOSITION COMPRISING AN ETHYLENE-RICH ELASTOMER, A PEROXIDE AND A SPECIFIC ACRYLATE DERIVATIVE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.08.2018 FR 1857605**

(43) Date de publication de la demande:
**30.06.2021 Bulletin 2021/26**

(73) Titulaire: **COMPAGNIE GENERALE DES ETABLISSEMENTS MICHELIN**
**63040 Clermont-Ferrand (FR)**

(72) Inventeurs:
- **PIBRE, Guillaume**
  **63040 CLERMONT-FERRAND CEDEX 9 (FR)**
- **MESSINA, Andrea**
  **63040 CLERMONT-FERRAND CEDEX 9 (FR)**
- **GORNARD, Benjamin**
  **63040 CLERMONT-FERRAND CEDEX 9 (FR)**

(74) Mandataire: **Wroblewski, Nicolas Paul André**
**M. F. P. MICHELIN**
**23, place des Carmes-Déchaux**
**Service juridique - Propriété Intellectuelle**
**DCJ/PI - F35 - Site de Ladoux**
**63040 Clermont-Ferrand Cedex 9 (FR)**

(56) Documents cités:
**WO-A1-2018/109312 FR-A1- 3 030 544**
**US-A1- 2013 324 660**

- **DATABASE WPI Week 201831 Thomson Scientific, London, GB; AN 2018-280054 XP002791330, & CN 107 880 332 A (WUHU RUIDE MECHANICAL TECHNOLOGY CO LTD) 6 avril 2018 (2018-04-06)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C08K 3/04, C08L 23/06;**
**C08K 5/11, C08L 23/06;**
**C08K 5/14, C08L 23/06**

## Description

L'invention est relative aux pneumatiques et plus particulièrement à ceux dont la composition de la bande de roulement ou celle d'une couche interne comprend un dérivé d'acrylate polyfonctionnel et un peroxyde.

Les couches de pneumatiques telles que la bande de roulement ou les couches internes doivent obéir à un grand nombre d'exigences techniques, souvent antinomiques, parmi lesquelles une faible résistance au roulement, une résistance élevée à l'usure, un bon comportement routier, ainsi qu'un bon niveau de cohésion du matériau.

Les concepteurs de pneumatiques sont constamment à la recherche de solution permettant de faire évoluer le compromis de propriétés existant en améliorant au moins une propriété du pneumatique, sans pour autant pénaliser les autres.

Pour améliorer la résistance à l'usure, on le sait, une certaine rigidité de la bande de roulement est souhaitable, cette rigidification de la bande de roulement pouvant être obtenue par exemple en augmentant le taux de charge renforçante ou en incorporant certaines résines renforçantes dans les compositions de caoutchouc constitutives de ces bandes de roulement. Malheureusement, l'expérience montre qu'une telle rigidification de la bande de roulement peut diminuer de manière connue, les propriétés de résistance au roulement, en s'accompagnant d'une augmentation importante des pertes hystérétiques de la composition de caoutchouc. L'amélioration de la performance de rigidité en gardant une faible résistance au roulement est de ce fait un problème à résoudre pour les concepteurs de pneumatique.

Du point de vue de la résistance au roulement, le compromis de propriétés précité a pu être amélioré grâce à l'emploi de nouveaux mélanges possédant de bonnes propriétés mécaniques et une hystérèse aussi faible que possible afin de pouvoir les mettre en oeuvre sous forme de compositions de caoutchouc utilisables pour la fabrication de divers produits semi-finis entrant dans la composition de pneumatique. Par exemple, les documents WO 2016/102480 et WO 2016/102483 proposent d'utiliser un dérivé d'acrylate polyfonctionnel et un peroxyde dans des compostions à base d'élastomère diénique.

Ainsi, les manufacturiers cherchent toujours des solutions pour améliorer d'avantage à la fois rigidité et la résistance au roulement.

Poursuivant ses recherches, la Demanderesse a découvert de manière surprenante que l'utilisation de dérivés d'acrylate spécifiques dans une composition comprenant un copolymère statistique particulier comprenant des unités éthylène et des unités diéniques conjuguées, permet d'améliorer à la fois la résistance au roulement, la rigidité et le renforcement de la composition.

Ainsi, la présente invention a notamment pour objet un pneumatique comprenant une composition de caoutchouc à base de :

- une matrice élastomérique comprenant majoritairement un copolymère statistique comprenant des unités éthylène et des unités diéniques conjuguées, la fraction molaire des unités éthylène dans le copolymère étant comprise dans un domaine allant de 50% à 95%,
- au moins un peroxyde, et
- au moins un dérivé d'acrylate polyfonctionnel de formule (I)

$$[X]_p\,A \qquad (I)$$

dans laquelle :

o A représente un groupement hydrocarboné en $C_4$-$C_{30}$, linéaire, ramifié ou cyclique, interrompu et/ou substitué par un ou plusieurs hétéroatomes,

o A comprenant p valences libres, p ayant une valeur allant de 2 à 6,

o [X]p correspond à un radical de formule (II) :

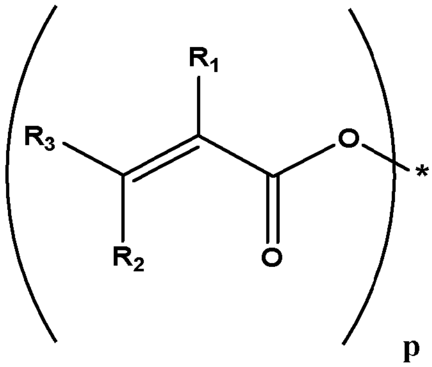

(II)

dans laquelle,

- $R_1$, $R_2$ et $R_3$ représentent indépendamment un atome d'hydrogène ou un groupement hydrocarboné en $C_1$-$C_8$ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, $R_2$ et $R_3$ pouvant former ensemble un cycle non aromatique,
- (*) représente le point d'attachement du radical de formule (II) à A,

o étant entendu que les 2 à 6 radicaux X sont identiques ou différents.

## I- DÉFINITIONS

Par l'expression "composition à base de", il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on décrit un intervalle de valeurs par l'expression "de a à b", on décrit également et préférentiellement l'intervalle représenté par l'expression "entre a et b".

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. De préférence par majoritaire, on entend présent à plus de 50%, de préférence plus de 60%, 70%, 80%, 90%, et plus préférentiellement le composé « majoritaire » représente 100%.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

## II- DESCRIPTION DE L'INVENTION

### II-1 Matrice élastomérique

La composition du pneumatique selon l'invention a comme caractéristique essentielle de comprendre une

matrice élastomérique comprenant majoritairement un copolymère statistique comprenant des unités éthylène et des unités diéniques conjuguées (également appelé dans la présente « le copolymère »), la fraction molaire des unités éthylène dans le copolymère étant comprise dans un domaine allant de 50% à 95%.

Selon l'invention, les unités diéniques conjuguées sont de préférence choisies dans le groupe constitué par les unités butadiènes, les unités isoprènes et les mélanges de ces unités diéniques conjuguées. De préférence encore, les unités diéniques conjuguées sont majoritairement, voire préférentiellement exclusivement, des unités butadiène.

Avantageusement, la microstructure du copolymère est homogène. Un copolymère est de microstructure homogène lorsque pour chacune de ces unités, à chaque instant de polymérisation, les concentrations dans la chaîne sont identiques ou quasi-identiques. Ainsi, pour chacune de ces unités, à un instant donné, la concentration est identique ou quasi-identique à sa concentration à l'instant juste avant et après, et ainsi à tout instant de la polymérisation. Dans l'expression « la concentration est identique ou quasi-identique à », par « quasi-identique », on entend, au sens de la présente invention, une variation inférieure à 2% molaire.

En particulier, dans le copolymère statistique comprenant des unités éthylène et des unités diéniques conjuguées la concentration molaire en chacune de ces unités est constante tout le long de la chaîne du copolymère. Ainsi, pour un nombre représentatif d'unités successives définissant un segment, présent en début, milieu, fin ou en tout autre endroit de la chaîne du copolymère, la concentration en unités éthylène et unités diéniques conjuguées est identique ou quasi-identique dans chaque segment. Un enchaînement de 10 unités peut-être un nombre représentatif.

Avantageusement, la concentration en unités éthylène et en unités diéniques conjuguées (de préférence en unités butadiéniques) est identique ou quasi-identique tout le long de la chaîne du copolymère. La concentration en chacune des unités va pouvoir être déterminée à l'avance en fonction de la nature du système catalytique choisi et des conditions opératoires (concentrations et pression monomères notamment).

De manière avantageuse, la fraction molaire des unités éthylène dans le copolymère est comprise dans un domaine allant de 60% à 90%, de préférence de 65% à 85%.

La fraction molaire d'unités diéniques conjuguées (de préférence d'unité butadiène) dans le copolymère est inférieure ou égale à 50%. De préférence, elle est comprise dans un domaine allant de 5% à 50%, de préférence de 10% à 40%, de préférence de 15% à 35%.

Selon l'invention, le copolymère statistique comprenant des unités éthylène et des unités diéniques conjuguées peut comprendre des unités trans-1,2-cyclohexane. Lorsque le copolymère comprend des unités trans-1,2-cyclohexane, la fraction molaire d'unités trans-1,2-cyclohexane dans le copolymère est de préférence comprise entre 0% et 25%, de préférence de 1% à 10%, de préférence encore de 1% à 5%.

Selon l'invention, le copolymère statistique comprenant des unités éthylène et des unités diéniques conjuguées peut comprendre des unités vinylaromatiques. A titre d'unité vinylaromatique convient par exemple le styrène, l'ortho-, méta-, paraméthylstyrène, le mélange commercial "vinyle-toluène", le paratertiobutylstyrène, les méthoxystyrènes, les chlorostyrènes, le vinylmésitylène, le divinylbenzène, le vinylnaphtalène. Avantageusement, le copolymère statistique comprenant des unités éthylène et des unités diéniques conjuguées ne comprend pas d'unité vinylaromatique.

Avantageusement, le copolymère statistique comprenant des unités éthylène et des unités diéniques conjuguées présente une masse Mn allant de 20 000 g/mol à 1500 000 g/mol, plus préférentiellement allant de 60 000 g/mol à 250 000 g/mol.

Avantageusement également, le copolymère statistique comprenant des unités éthylène et des unités diéniques conjuguées présente un indice de polymolécularité qui est inférieur à 2,5. De préférence, l'indice Ip desdits copolymères est inférieur à 2 et, à titre encore plus préférentiel, cet indice Ip est inférieur ou égal à 1,9. A l'instar des masses moléculaires Mn, les indices de polymolécularité Ip ont été déterminés dans la présente demande par chromatographie d'exclusion stérique.

Avantageusement également, le copolymère statistique comprenant des unités éthylène et des unités diéniques conjuguées présente une température de transition vitreuse Tg qui est inférieure à 25°C. Plus précisément, ces copolymères peuvent par exemple présenter une température Tg comprise entre -45 °C et -20 °C.

Avantageusement également, lorsque le copolymère statistique comprenant des unités éthylène et des unités diéniques conjuguées comprend en outre des unités trans-1,2-cyclohexane, le copolymère présente une cristallinité inférieure à 25%, plus avantageusement inférieure à 15%, encore plus avantageusement inférieure à 10%.

Les techniques utilisées pour la détermination des fractions molaires, des masses moléculaires, des températures de transitions vitreuses et de la cristallinité sont décrites ci-après dans les exemples.

Les copolymères statistiques comprenant des unités éthylène et des unités diéniques conjuguées utilisables dans le cadre de la présente invention peuvent être obtenu selon des méthodes de synthèse connues, notamment celles décrites dans les documents EP 1 092 731, EP 1 554 321, EP 1 656 400, EP 1 829 901, EP 1 954 705, EP 1 957 506, FR 3 045 612 ou FR 3 045 613.

Selon l'invention, de manière avantageuse, la matrice élastomérique comprend uniquement, à titre d'élastomère, le copolymère statistique comprenant des unités éthylène et des unités diéniques conjuguées.

Alternativement, la matrice élastomérique peut comprendre en outre un élastomère diénique différent du copolymère statistique comprenant des unités éthylène et des unités diéniques conjuguées (également appelé dans la présente « l'autre élastomère »). L'autre élastomère, lorsqu'il est présent, est minoritaire, c'est-à-dire qu'il représente moins de 50%, 40%, 30%, 20%, voire moins de 10% en poids de la matrice élastomérique.

L'autre élastomère de la matrice élastomérique du pneumatique selon l'invention est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés.

II-2 Acrylate polyfonctionnel

Le pneumatique selon l'invention comprend une composition qui comprend au moins un dérivé d'acrylate polyfonctionnel de formule (I)

$$[X]_p A \qquad (I)$$

dans laquelle :

- o A représente un groupement hydrocarboné en $C_4$-$C_{30}$, linéaire, ramifié ou cyclique, interrompu et/ou substitué par un ou plusieurs hétéroatomes,
- o A comprenant p valences libres, p ayant une valeur allant de 2 à 6,
- o [X]p correspond à un radical de formule (II) :

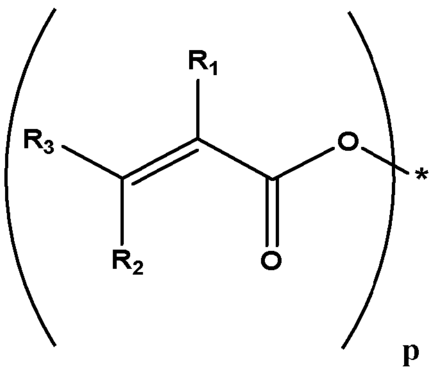

(II)

dans laquelle,

- ▪ $R_1$, $R_2$ et $R_3$ représentent indépendamment un atome d'hydrogène ou un groupement hydrocarboné en $C_1$-$C_8$ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, $R_2$ et $R_3$ pouvant former ensemble un cycle non aromatique,
- ▪ (*) représente le point d'attachement du radical de formule (II) à A,

o étant entendu que les 2 à 6 radicaux X sont identiques ou différents.

Par groupe alkyle cyclique, on entend un groupe alkyle comprenant un ou plusieurs cycles.

Par groupement ou chaîne hydrocarboné(e) interrompu(e) par un ou plusieurs hétéroatomes, on entend un groupe ou chaîne comprenant un ou plusieurs hétéroatomes, chaque hétéroatome étant compris entre deux atomes de carbone dudit groupe ou de ladite chaîne, ou entre un atome de carbone dudit groupe ou de ladite chaîne et un autre hétéroatome dudit groupe ou de ladite chaîne ou entre deux autres hétéroatomes dudit groupe ou de ladite chaîne.

Par groupement ou chaîne hydrocarboné(e) substitué(e) par un ou plusieurs hétéroatomes, on entend un groupe ou chaîne comprenant un ou plusieurs hétéroatomes, chaque hétéroatome étant lié au groupement ou à la chaîne hydrocarboné(e) par une liaison covalente sans interrompre le groupement ou la chaîne hydrocarboné(e).

Le ou les hétéroatomes des radicaux $R_1$, $R_2$ et $R_3$ peuvent être des atomes d'azote, de soufre ou d'oxygène.

Préférentiellement, $R_1$, $R_2$ et $R_3$ représentent indépendamment un atome d'hydrogène, un groupe méthyle ou un groupe éthyle. Plus préférentiellement, $R_1$, $R_2$ et $R_3$ peuvent représenter chacun un atome d'hydrogène. Alternativement, $R_2$ et $R_3$ peuvent représenter chacun un atome d'hydrogène et $R_1$ représente un groupe méthyle.

Le nombre de valence p dépend de la nature du radical A. Selon l'invention, p peut valoir 2, 3, 4, 5 ou 6. De préférence, p vaut 2, 3 ou 4, de préférence 2.

Le ou les hétéroatomes de A peuvent être choisis dans le groupe constitué par les atomes d'oxygène, de soufre, d'azote, de silicium, de phosphore et leurs combinaisons. De préférence, le ou les hétéroatomes de A sont choisis dans le groupe constitué par atomes d'oxygène et de soufre. De préférence encore, le ou les hétéroatomes de A sont des atomes d'oxygène.

En d'autres termes, A représente avantageusement un groupement hydrocarboné en $C_4$-$C_{30}$, linéaire, ramifié ou cyclique, interrompu et/ou substitué par un ou plusieurs hétéroatomes choisis parmi les atomes d'oxygène, de soufre, d'azote, de silicium, de phosphore et leurs combinaisons, de préférence choisis dans le groupe constitué par atomes d'oxygène et de soufre. De préférence encore A représente avantageusement un groupement hydrocarboné en $C_4$-$C_{30}$, linéaire, ramifié ou cyclique, de préférence, linéaire ou ramifié, interrompu et/ou substitué par un ou plusieurs atomes d'oxygène et/ou de soufre, de préférence interrompu et/ou substitué par un ou plusieurs atomes d'oxygène.

De préférence, A représente un groupement hydrocarboné en $C_4$-$C_{30}$, linéaire, ramifié ou cyclique, de préférence linéaire ou ramifié, interrompu par un ou plusieurs atomes d'oxygène et/ou de soufre, de préférence interrompu par un ou plusieurs atomes d'oxygène. De préférence encore, A représente un groupement hydrocarboné en $C_4$-$C_{30}$, linéaire ou ramifié, interrompu par un ou plusieurs atomes d'oxygène.

Lorsque A représente un groupement hydrocarboné en $C_4$-$C_{30}$, il peut s'agir par exemple d'un groupement hydrocarboné en $C_5$-$C_{20}$, de préférence en $C_6$-$C_{16}$.

Lorsque A comprend un groupement hydrocarboné cyclique, il peut s'agir d'un groupement hydrocarboné cyclique non-aromatique ou aromatique, de préférence non-aromatique.

Avantageusement, A représente un radical de formule (III) :

**$[Y]_q$ Z** **(III)**

dans laquelle

- Z comprenant q valences libres, q ayant une valeur allant de 2 à 6,
- [Y]q correspond à un radical de formule (IV) :

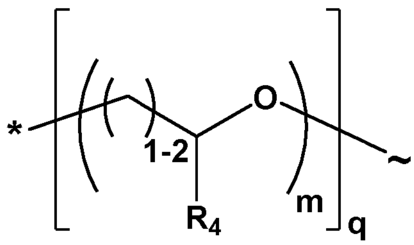

**(IV)**

dans laquelle

- o $R_4$ représente un atome d'hydrogène ou un groupe méthyle,
- o m est un nombre entier allant de 1 à 13, de préférence de 2 à 6,
- o (*) représente le point d'attachement du radical de formule (IV) au radical de formule (II)
- o (~) représente le point d'attachement du radical de formule (IV) à Z
- o Z correspond à un groupement hydrocarboné en $C_2$-$C_{20}$, linéaire ou ramifié, de préférence Z correspond à un radical dans le groupe constitué par :

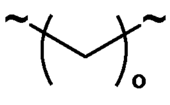 , 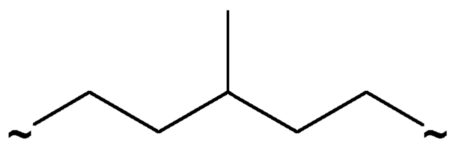 , 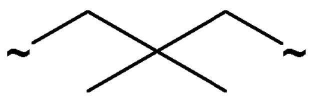 ,

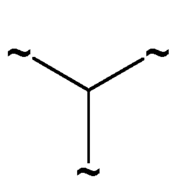 , 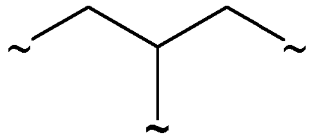 , 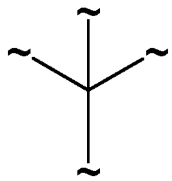 , 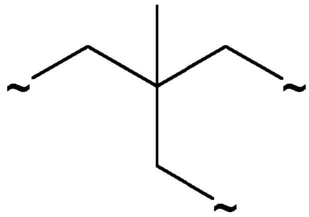 ,

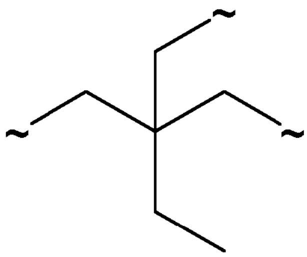 , 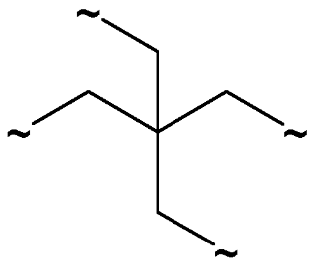 , et

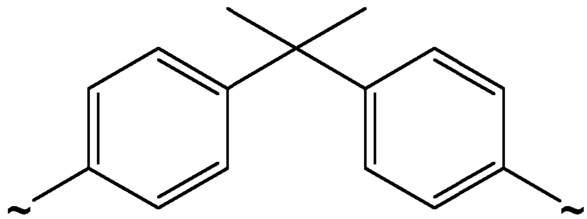

dans lesquels, o est un nombre entier allant de 2 à 16, de préférence de 4 à 10, et (~) représente le point d'attachement de Z au radical de formule (IV).

L'homme du métier comprend bien que lorsque A représente un radical de formule (III), le nombre de valence p de A est égale au nombre de valence q de Z.

A titre d'exemple de dérivé d'acrylate polyfonctionnel de formule (I) dans laquelle A représente un radical de formule (III), on peut citer ceux de la société SARTOMER sous la dénomination SR264 (polyéthylène glycol (300) diacrylate), SR268G (diacrylate de tétraéthylène glycole), SR306 (diacrylate de tripropylène glycol), SR349 (diacrylate de bisphénol A éthoxylé (3)), SR508 (diacrylate de dipropylène glycol), CD561 (diacrylate d'hexanediol éthoxylé (5), SR9003 (diacrylate de néopentylglycol propoxylé (2)), SR454 (triacrylate de trimethylolpropane éthyoxylé (3)), SR492 triacrylate de triméthylolpropane propoxylé (3)), SR494 (tetraacrylate de penerythritol éthoxylé (4)), SR9020 (triacrylate de glyceryle propoxylé (3)), SR205 (dimehtacrylate de triehtylene glycole), SR210 (diméthacrylate de polyéthylène glycol (200)), SR348 (diméthacrylate de bisphénol A éthoxylé (3)), SR596 (tetraméthacrylate de pentaerythritol alkoxylé) ; ceux de la société MIWON SPECIALTY CHEMICAL sous la dénomination MIRAMER M202, M206, M210, M216, M220, M222, M232, M240, M244, M270, M280, M282, M284, M286, M290, M320, M360, M2040, M2100, M2300, M3130, M3150, M3160, M3190, LR3130, M4004, M233, M241, M245, M2101, M2301, M281, M283, M287 ; ou encore ceux de la société IGM RESINS sous la dénomination PHOTOMER 4028, 4050, 4054, 4056, 4062, 4070, 4127, 4226, 4361, 4362, 4072, 4094, 4149, 4158, 3005.

Alternativement, A peut représenter un radical choisi dans le groupe constitué par :

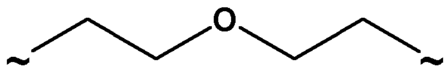 , 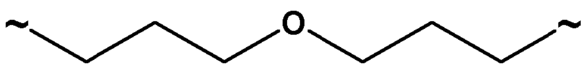 ,

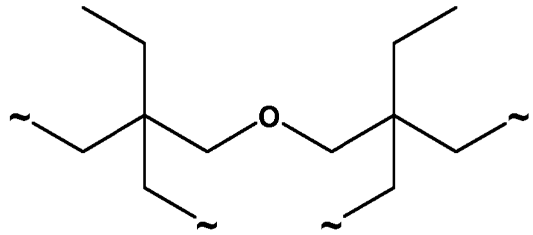,
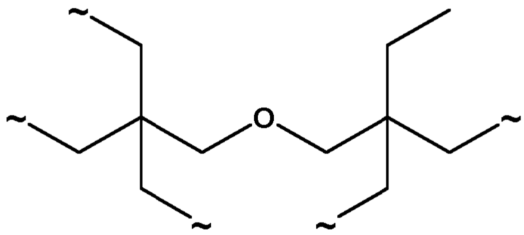,
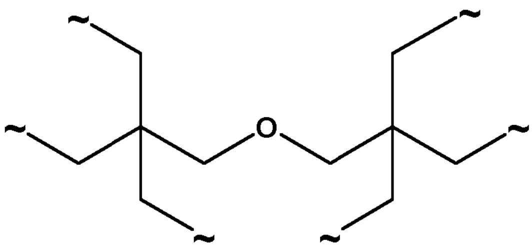, et
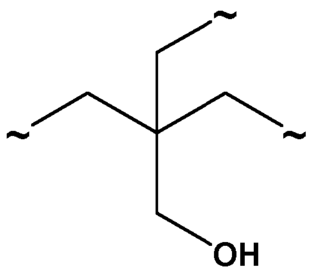

A titre d'exemple de dérivé d'acrylate polyfonctionnel de formule (I) dans laquelle A représente un radical choisi dans le groupe cité au paragraphe précédent, on peut citer ceux de la société SIGMA-ALDRICH : le diacrylate de diéthylène glycol, le diacrylate de dipropylène glycol, le pentaacrylate de dipentaerythriol (DPPA), l'hexaacylate de dipentaerythriol (DPHA) ; ceux de la société SARTOMER sous la dénomination tétraacrylate de di-triméthylolpropane (SR355), pentaacrylate de di-pentaerythritol (SR399), triacrylate de pentaerythritol (SR444), dimethacrylate de diéthylène glycol (SR231), ceux de la société MIWON SPECIALTY CHEMICAL sous la dénomination MIRAMER M340, M410, M500, M600, M231; ou encore ceux de la société IGM RESIN sous la dénomination PHOTOMER 4306, 4600, 4666.

Selon l'invention, le dérivé d'acrylate plurifonctionnel de formule (I) est préférentiellement choisi dans le groupe constitué par le penta(méth)acrylate de dipentaerythriol, l'hexa(méth)acylate de dipentaerythriol, le di(méth)acrylate de diéthylène glycol, le di(méth)acrylate de dipropylène glycol, le di(méth)acrylate d'hexanediol éthoxylé, le di(méth)acrylate d'hexanediol propoxylé, le tri(méth)acrylate de triméthylpropane éthoxylé, le tri(méth)acrylate de triméthylpropane propoxylé, le tétra(méth)acrylate de pentaerythritol éthoxylé, le tétra(méth)acrylate de pentaerythritol propoxylé, le di(méth)acrylate de bisphénol A éthoxylé, le di(méth)acrylate de bisphénol A propoxylé, le di(méth)acrylate d'hexanediol glycol éthoxylé, le di(méth)acrylate d'hexanediol glycol propoxylé, le di(méth)acrylate de neopentyl glycol éthoxylé, le di(méth)acrylate de neopentyl glycol propoxylé, le tri(méth)acrylate de glycérol éthoxylé, le tri(méth)acrylate de glycérol propoxylé, le tri(méth)acrylate de triméthylolpropane éthoxylé, le tri(méth)acrylate de triméthylolpropane propoxylé, le di(méth)acrylate d'esterdiol, le tri(méth)acrylate de tri(2-hydroxy éthyl)isocyanurate, l'hydroxypivalyl hydroxypivalate bis[6-(acryloyloxy)hexanoate] et leurs mélanges.

De préférence, le dérivé d'acrylate plurifonctionnel de formule (I) est choisi dans le groupe constitué par le pentaacrylate de dipentaerythriol, l'hexaacylate de dipentaerythriol, le diacrylate de diéthylène glycol, le diacrylate de dipropylène glycol, le diacrylate d'hexanediol éthoxylé, le diacrylate d'hexanediol propoxylé, le triacrylate de triméthylpropane éthoxylé, le triacrylate de triméthylpropane propoxylé, le tétraacrylate de pentaerythritol éthoxylé, le tétraacrylate de pentaerythritol propoxylé, le diacrylate de bisphénol A éthoxylé, le diacrylate de bisphénol A propoxylé, le diacrylate d'hexanediol glycol éthoxylé, le diacrylate d'hexanediol glycol propoxylé, le diacrylate de neopentyl glycol éthoxylé, le diacrylate de neopentyl glycol propoxylé, le triacrylate de glycérol éthoxylé, le triacrylate de glycérol propoxylé, le triacrylate de triméthylolpropane éthoxylé, le triacrylate de triméthylolpropane propoxylé, le diacrylate d'esterdiol, le triacrylate de tri(2-hydroxy éthyl)isocyanurate, l'hydroxypivalyl hydroxypivalate bis[6-(acryloyloxy)hexanoate] et leurs mélanges.

De préférence, le dérivé d'acrylate plurifonctionnel de formule (I) est préférentiellement choisi dans le groupe constitué par le diacrylate de diéthylène glycol, le diacrylate de dipropylène glycol, le diacrylate d'hexanediol éthoxylé, le diacrylate d'hexanediol propoxylé, le triacrylate de triméthylpropane éthoxylé, le triacrylate de triméthylpropane propoxylé, le tétraacrylate de pentaerythritol éthoxylé, le tétraacrylate de pentaerythritol propoxylé, le triacrylate de glycérol éthoxylé, le triacrylate de glycérol propoxylé, le triacrylate de triméthylolpropane éthoxylé, le triacrylate de triméthylolpropane propoxylé, et leurs mélanges.

Dans la composition de pneumatique selon l'invention, la quantité de dérivé d'acrylate polyfonctionnel de formule (I), dans la composition du pneumatique selon l'invention, est de préférence comprise dans un domaine allant de 5 à 50 pce, de préférence de 5 à 30 pce, de préférence de plus de 5 à 20 pce, de préférence de plus de 5 à 15 pce.

II-3 Peroxyde

En plus de la matrice élastomérique et de l'acrylate polyfonctionnel précédemment décrits, la composition de caoutchouc du pneumatique de l'invention utilise un peroxyde, qui peut être tout peroxyde connu de l'homme de l'art.

Parmi les peroxydes, bien connus de l'homme de l'art, il est préférable d'utiliser pour l'invention un peroxyde choisi dans la famille des peroxydes organiques. Ainsi, avantageusement, le peroxyde est un peroxyde organique.

Par « peroxyde organique », on entend un composé organique, c'est-à-dire contenant du carbone, comportant un groupe -O-O- (deux atomes d'oxygène liés par une liaison covalente simple).

Avantageusement, le peroxyde organique est choisi dans le groupe constitué par les peroxydes de dialkyle, les monoperoxycarbonates, les peroxydes de diacyle, les peroxycétales, les peroxyesters, et leurs mélanges.

De préférence, les peroxydes de dialkyle sont choisis dans le groupe constitué par le peroxyde de dicumyle, le peroxyde de di-t-butyle, peroxyde de t-butylcumyle , le 2,5-diméthyl-2,5-di(t-butylperoxy)hexane , le 2,5-diméthyl-2,5-di(t-amylperoxy)-hexane, le 2,5-diméthyl-2,5-di(t-butylperoxy)hexyne-3, le 2,5-diméthyl-2,5-di(t-amylperoxy)hexyne-3, $\alpha,\alpha'$-di-[(t-butyl-peroxy)isopropyl] benzène, le a,a'-di-[(t-amyl-peroxy)isopropyl] benzène, le peroxyde de di-t-amyle , le 1,3,5-tri-[(t-butylperoxy)isopropyl]benzène, le 1,3-diméthyl-3-(t-butylperoxy)butanol, le 1,3-diméthyl-3-(t-amylperoxy) butanol, et leurs mélanges.

Certains monoperoxycarbonates tels que le OO-tert-butyl-O-(2-éthylhexyl) monoperoxycarbonate, le OO-tert-butyl-O-isopropyl monoperoxycarbonate, le OO-tert-amyl-O-2-éthyl hexyl monoperoxycarbonate, et leurs mélanges, peuvent également être utilisés.

Parmi les peroxydes de diacyles, le peroxyde préféré est le peroxyde de benzoyle.

Parmi les peroxycétales, les peroxydes préférés sont choisis dans le groupe constitué par le 1,1-di-(t-butylperoxy)-3,3,5-triméthylcyclohexane, le 4,4-di-(t-butylperoxy)valérate de n-butyle, le 3,3-di-(t-butylperoxy)butyrate d'éthyle, le 2,2-di-(t-amylperoxy)-propane, le 3,6,9-triethyl-3,6,9-trimethyl-1,4,7-triperoxynonane (ou peroxyde de méthyl éthyl cétone trimère cyclique), le 3,3,5,7,7-pentamethyl-1,2,4-trioxepane, le 4,4-bis(t-amylperoxy)valérate de n-butyle, le 3,3-di(t-amylperoxy)butyrate d'éthyle, le 1,1-di(t-butylperoxy)cyclohexane, le 1,1-di(t-amylperoxy)cyclohexane, et leurs mélanges.

De préférence, les peroxyesters sont choisis dans le groupe constitué par le tert-butylperoxybenzoate, le tert-butyleperoxy-2-ethylhexanoate, le tert-butyleperoxy-3,5,5-triméthylehexanoate et leurs mélanges.

De préférence, le peroxyde organique est choisis dans le groupe constitué par le peroxyde de dicumyle, les peroxydes d'aryle ou de diaryle, le peroxyde de diacétyle, le peroxyde de benzoyle, le peroxyde de dibenzoyle, le peroxyde de ditertbutyle, le peroxyde de tertbutylcumyle, le 2,5-bis (tertbutylperoxy)-2,5-diméthylhexane, le n-butyl-4,4'-di(tert-butylperoxy) valérate, le OO-(t-butyl)-O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et leurs, encore plus préférentiellement dans le groupe constitué par le peroxyde de dicumyle, le n-butyl-4,4'-di(tert-butylperoxy)-valérate, le OO-(t-butyl) O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et leurs mélanges.

Dans la composition de pneumatique selon l'invention, la quantité de peroxyde est de préférence comprise dans un domaine allant de 0,1 à 10 pce. Plus préférentiellement, la quantité de peroxyde dans la composition est comprise dans un domaine allant de 0,5 à 5 pce, de préférence de 1 à 4 pce.

Il existe dans le commerce divers produits conditionnés, connus sous leurs marques de fabrique; on peut citer:-le « Dicup » de la société Hercules Powder Co., le « Perkadox Y12 » de la Société Noury van der Lande, le « Peroximon F40 » de la société Montecatini Edison S.p.A., le « Trigonox » de la Société Noury van der Lande, le « Varox » de la société R.T.Vanderbilt Co., ou encore le « Luperko », de la société Wallace & Tiernan, Inc.

II-4 Charge renforçante

La composition du pneumatique selon l'invention ne nécessite pas de charge renforçante, ce qui est l'un de ses avantages puisque cela permet de réduire fortement l'hystérèse de la composition, et ainsi la résistance au roulement du pneumatique.

Ainsi, de préférence, la composition du pneumatique selon l'invention ne comprend pas de charge renforçante ou en comprend moins de 160 pce.

Avantageusement, la composition du pneumatique peut comprendre de 5 à 120 pce, de préférence de 5 à 65 pce, de préférence de 5 à 60, pce, de préférence de 10 à 55 pce, de charge renforçante, connue pour ses capacités à renforcer une composition de caoutchouc utilisable pour la fabrication de pneumatiques.

La charge renforçante peut être une charge organique telle que du noir de carbone, une charge inorganique telle que de la silice ou encore un mélange de ces deux types de charges.

Comme noirs de carbone conviennent tous les noirs de carbone, notamment les noirs conventionnellement

utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO97/36724-A2 ou WO99/16600-A1).

Comme exemple de charges organiques autres que des noirs de carbone, on peut citer les charges organiques de polyvinyle fonctionnalisé telles que décrites dans les demandes WO2006/069792-A1, WO2006/069793-A1, WO2008/003434-A1 et WO2008/003435-A1.

Par « charge inorganique renforçante », doit être entendue ici toute charge inorganique ou minérale, quelles que soient sa couleur et son origine (naturelle ou de synthèse), encore appelée charge « blanche », charge « claire » ou même charge « non-noire » par opposition au noir de carbone, capable de renforcer à elle seule, sans autre moyen qu'un agent de couplage intermédiaire, une composition de caoutchouc destinée à la fabrication de pneumatiques. De manière connue, certaines charges inorganiques renforçantes peuvent se caractériser notamment par la présence de groupes hydroxyle (-OH) à leur surface.

Comme charges inorganiques renforçantes conviennent notamment des charges minérales du type siliceux, préférentiellement la silice ($SiO_2$) ou du type alumineux, en particulier l'alumine ($Al_2O_3$). La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 $m^2$/g, de préférence comprises dans un domaine allant de 30 à 400 $m^2$/g, notamment de 60 à 300 $m^2$/g.

Pour les charges inorganiques telles que la silice par exemple, la surface spécifique BET de la charge inorganique est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17]. Par ailleurs, les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ® 5000GR », « Ultrasil ® 7000GR » de la société Evonik, les silices « Zeosil ® 1085GR», « Zeosil® 1115 MP », « Zeosil® 1165MP », « Zeosil® Premium 200MP », « Zeosil® HRS 1200 MP » de la Société Solvay. À titre de silice non HDS, les silices commerciales suivantes peuvent être utilisées : les silices « Ultrasil ® VN2GR », « Ultrasil ® VN3GR » de la société Evonik, la silice « Zeosil® 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

À titre d'autres exemples de charges inorganiques susceptibles d'être utilisées dans les compositions de caoutchouc de l'invention peuvent être encore cités les charges minérales du type alumineux, en particulier de l'alumine ($Al_2O_3$), des oxydes d'aluminium, des hydroxydes d'aluminium, des aluminosilicates, des oxydes de titane, des carbures ou nitrures de silicium, tous du type renforçants tels que décrits par exemple dans les demandes WO99/28376-A2, WO00/73372-A1, WO02/053634-A1, WO2004/003067-A1, WO2004/056915-A2, US6610261-B1 et US6747087-B2. On peut citer notamment les alumines « Baikalox A125 » ou « CR125 » (société Baïkowski), « APA-100RDX » (Condéa), « Aluminoxid C » (Evonik) ou « AKP-G015 » (Sumitomo Chemicals).

L'état physique sous lequel se présente la charge inorganique renforçante est indifférent, que ce soit sous forme de poudre, de microperles, de granulés, ou encore de billes ou toute autre forme densifiée appropriée. Bien entendu on entend également par charge inorganique renforçante des mélanges de différentes charges inorganiques renforçantes, en particulier de silices telles que décrites ci-dessus.

L'homme du métier comprendra qu'en remplacement de la charge inorganique renforçante décrite ci-dessus, pourrait être utilisée une charge renforçante d'une autre nature, dès lors que cette charge renforçante d'une autre nature serait recouverte d'une couche inorganique telle que de la silice, ou bien comporterait à sa surface des sites fonctionnels, notamment hydroxyles, nécessitant l'utilisation d'un agent de couplage pour établir la liaison entre cette charge renforçante et l'élastomère diénique. À titre d'exemple, on peut citer des noirs de carbone partiellement ou intégralement recouverts de silice, ou des noirs de carbone modifiés par de la silice, tels que, à titre non limitatif, les charges de type « Ecoblack® » de la série CRX2000 » ou de la série « CRX4000 » de la société Cabot Corporation.

Pour coupler la charge inorganique renforçante à l'élastomère diénique, on peut utiliser de manière bien connue un agent de couplage (ou agent de liaison) au moins bifonctionnel destiné à assurer une connexion suffisante, de nature

chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination « NXT Silane ». Plus préférentiellement, l'organosilane est un organosilane polysulfuré.

Bien entendu pourraient être également utilisés des mélanges des agents de couplage précédemment décrits.

Lorsqu'une charge inorganique est utilisée, la teneur en agent de couplage dans la composition du pneumatique selon de l'invention est avantageusement inférieure ou égale à 10 pce, étant entendu qu'il est en général souhaitable d'en utiliser le moins possible. Typiquement le taux d'agent de couplage représente de 0,5% à 15% en poids par rapport à la quantité de charge inorganique renforçante. Son taux est préférentiellement compris dans un domaine allant de 0,5 à 7,5 pce, plus préférentiellement compris dans un domaine allant de 3 à 3 pce. Ce taux est aisément ajusté par l'homme du métier selon le taux de charge inorganique renforçante utilisé dans la composition de l'invention.

De préférence, la charge renforçante de la composition de caoutchouc du pneumatique selon l'invention comprend un noir de carbone, une silice ou un de leurs mélanges. Plus préférentiellement encore la charge renforçante comprend majoritairement du noir de carbone. La charge renforçante peut comprendre par exemple de 50 à 100% en masse de noir de carbone, de préférence de 55 à 90% en masse, de préférence de 60 à 80% en masse. De manière particulièrement avantageuse, la charge renforçante comprend exclusivement du noir de carbone.

Avantageusement, le taux de charge renforçante, de préférence la charge renforçante comprenant majoritairement du noir de carbone, dans la composition du pneumatique selon l'invention, est compris dans un domaine allant de 10 à 55 pce, de préférence de 15 à 50 pce, de préférence 20 à 45 pce.

## II-5 Système de vulcanisation

La composition du pneumatique selon l'invention ne nécessite pas de système de vulcanisation, ce qui est l'un de ses avantages puisque cela permet de simplifier la formule, et la préparation de la composition. Si cependant un système de vulcanisation est présent dans la composition, il l'est préférablement dans de faibles quantités.

Le système de vulcanisation proprement dit est habituellement à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre moléculaire (ou de manière équivalente les agents donneurs de soufre moléculaire), lorsqu'il est utilisé, l'est à un taux préférentiellement inférieur à 0,5 pce.

Ainsi, de manière très préférentielle, la composition ne contient pas de soufre moléculaire ou d'agent donneur de soufre en tant qu'agent de vulcanisation ou en contient moins de 0,5 pce, de préférence moins de 0,3 pce, de préférence encore moins de 0,1 pce. De préférence encore, la composition du pneumatique selon l'invention ne contient pas de soufre moléculaire ou d'agent donneur de soufre en tant qu'agent de vulcanisation.

Le système de vulcanisation de la composition selon l'invention peut également comprendre un ou plusieurs accélérateurs additionnels, par exemple les composés de la famille des thiurames, les dérivés dithiocarbamates de zinc, les sulfénamides, les guanidines ou les thiophosphates. On peut utiliser en particulier tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-tert-butyl-2-benzothiazyle sulfénamide (en abrégé "TBBS"), N-tert-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

Si un accélérateur est utilisé, il l'est à des taux tels que ceux pratiqués par l'homme du métier des compositions vulcanisées pour pneumatique. Néanmoins, la composition du pneumatique selon l'invention est préférentiellement dépourvue de tout accélérateur de vulcanisation.

II-6 Autres additifs possibles

Les compositions de caoutchouc du pneumatique selon l'invention peuvent comporter optionnellement également tout ou partie des additifs usuels habituellement utilisés dans les compositions d'élastomères pour pneumatique, comme par exemple des plastifiants (tels que des huiles plastifiantes et/ou des résines plastifiantes), des pigments, des agents de protection tels que cires anti-ozone, anti-ozonants chimiques, anti-oxydants, des agents anti-fatigue, des résines renforçantes (telles que décrites par exemple dans la demande WO 02/10269).

De préférence, la composition du pneumatique de l'invention est dépourvue d'agent antioxydant.

Selon un mode préférentiel, la composition du pneumatique de l'invention est dépourvue d'agent plastifiant. De manière alternative et selon un mode de réalisation également préférentiel, la composition selon l'invention comporte en outre un agent plastifiant. De préférence cet agent plastifiant est une résine hydrocarbonée solide (ou résine plastifiante), une huile d'extension (ou huile plastifiante), ou un mélange des deux.

II-7 Pneumatiques

La présente invention a également pour objet, un article de caoutchouc finis ou semi-finis, ainsi qu'un pneumatique, comprenant une composition conforme à la présente invention.

L'invention concerne particulièrement des pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, et autres.

Il est possible de définir au sein du pneumatique trois types de zones :

- La zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche aux gaz de gonflage, parfois appelée couche étanche intérieure ou gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.

La composition définie dans la présente description est particulièrement bien adaptée aux couches internes et aux bandes de roulement de pneumatique.

Aussi, dans le pneumatique selon la présente invention la composition peut être présente dans la bande de roulement et/ou au moins une couche interne du pneumatique. Selon l'invention, la couche interne peut être choisie dans le groupe constitué par les nappes carcasse, les nappes sommet, les bourrages-tringle, les pieds sommets, les couches de découplage, les gommes de bordure, les gommes de bourrage, la sous-couche de bande de roulement et les combinaisons de ces couches internes. De préférence, la couche interne est choisie dans le groupe constitué par les nappes carcasses, les nappes sommet, les bourrages-tringle, les pieds sommets, les couches de découplage et les combinaisons de ces couches internes.

L'invention concerne les pneumatiques et produits semi-finis pour pneumatiques précédemment décrits, les articles en caoutchouc, tant à l'état cru (c'est à dire, avant cuisson) qu'à l'état cuit (c'est à dire, après réticulation ou vulcanisation).

II-8 Préparation des compositions de caoutchouc

La composition de caoutchouc conforme à l'invention est fabriquée dans des mélangeurs appropriés, en utilisant deux phases de préparation successives bien connues de l'homme du métier :

- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, les charges éventuelles, les éventuels autres additifs divers, à l'exception du système de réticulation. L'incorporation de la charge éventuelle à l'élastomère peut être réalisée en une ou plusieurs fois en malaxant

thermomécaniquement. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C. On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée sous la forme d'un semi-fini (ou profilé) de caoutchouc utilisable par exemple comme une bande de roulement de pneumatique ou une couche interne pour véhicule tourisme. Ces produits peuvent ensuite être utilisés pour la fabrication de pneumatiques, selon les techniques connues de l'homme du métier.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation de la composition peut être conduite de manière connue de l'homme du métier, par exemple à une température comprise entre 130°C et 200°C, sous pression.

## III- EXEMPLES

### III-1 Mesures et tests utilisés

*Détermination des masses molaires : Analyse par Chromatographie d'Exclusion Stérique des copolymères*

a) Pour les copolymères solubles à température ambiante dans le tétrahydrofuranne (THF), on a déterminé les masses molaires par chromatographie d'exclusion stérique dans le THF. On a injecté les échantillons à l'aide d'un injecteur " Waters 717 " et d'une pompe " Waters 515 HPLC " à un débit de 1 $ml.min^{-1}$ dans une série de colonnes " Polymer Laboratories ". Cette série de colonnes, placée dans une enceinte thermostatée à 45°C, est composée de :

- 1 précolonne PL Gel 5 μm,
- 2 colonnes PL Gel 5 μm Mixte C,
- 1 colonne PL Gel 5 μm-500 Å.

On a réalisé la détection à l'aide d'un réfractomètre " Waters 410 ". On a déterminé les masses molaires par calibration universelle en utilisant des étalons de polystyrène certifiés par " Polymer Laboratories " et une double détection avec réfractomètre et couplage au viscosimètre.

Sans être une méthode absolue, la SEC permet d'appréhender la distribution des masses moléculaires d'un polymère. A partir de produits étalons commerciaux de type Polystyrène les différentes masses moyennes en nombre (Mn) et en poids (Mw) peuvent être déterminées et l'indice de polymolécularité calculé (Ip = Mw/Mn).

b) Pour les copolymères insolubles à température ambiante dans le tétrahydrofuranne, les masses molaires ont été déterminées dans le 1,2,4- trichlorobenzène. On les a tout d'abord dissous à chaud (4 h 00 à 150°C), puis on les a injectés à 150°C avec un débit de 1 $ml.min^{-1}$ dans un chromatographe " Waters Alliance GPCV 2000 " équipé de trois colonnes " Styragel " (2 colonnes " HT6E " et 1 colonne " HT2 "). On a effectué la détection à l'aide d'un réfractomètre " Waters ". On a déterminé les masses molaires par calibration relative en utilisant des étalons polystyrène certifiés par " Polymer Laboratories ".

*Détermination des fractions molaires*

On se reportera à l'article « Investigation of ethylene/butadiene copolymers microstructure by 1H and 13C NMR, Llauro M. F., Monnet C., Barbotin F., Monteil V., Spitz R., Boisson C., Macromolecules 2001,34, 6304-6311 », pour une description détaillée des techniques de RMN'H et de RMN$^{13}$C qui ont été précisément utilisées dans la présente demande pour déterminer les fractions molaires des unités éthylène, unités diéniques conjuguées et des éventuelles unités *trans-1,2* cyclohexane.

*Détermination de la cristallinité*

La mesure de cristallinité se fait par comparaison de l'enthalpie de fusion observée dans le cas des EBR. Ce phénomène endothermique est observé lors de l'analyse du thermogramme de la mesure DSC (Differential Scanning Calorimetry). La mesure se fait par balayage aller/retour de -150°C à 200°C sous atmosphère inerte (hélium) avec une rampe de 20°C/min.

Le signal correspondant au phénomène endothermique (fusion) est intégré et le taux de cristallinité est le rapport entre l'enthalpie mesurée et celle du polyéthylène parfaitement cristallin (290J/g).

%Cristallinité = (Enthalpie mesurée en J/g) / (enthalpie théorique d'un polyéthylène 100% cristallin en J/g).

*Détermination de la température de transition vitreuse*

La température de transition vitreuse, Tg, est mesurée dans la présente demande par la technique DSC (Differential Scanning Calorimetry) sur un appareil de dénomination « Setaram DSC 131 ». Le programme de température utilisé correspond à une montée en température de-120°C à 150°C à la vitesse de 10°C/min. On pourra se référer à la méthode décrite dans la demande WO 2007/054224 (page 11).

*Propriétés dynamiques (après cuisson): Essai de traction*

Ces essais de traction permettent de déterminer les contraintes d'élasticité et les propriétés à la rupture. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette. On mesure en première élongation les modules sécants nominaux (ou contraintes apparentes, en MPa) à 50%, 100% et 300% d'allongement notés respectivement M50, M100 et M300.

Les essais d'allongement rupture (AR%) et de contrainte rupture (CR) sont basées sur la norme NF ISO 37 de Décembre 2005 sur une éprouvette haltère de type H2 et sont mesurés à une vitesse de traction de 500 mm/min. L'allongement rupture est exprimé en % d'allongement. La contrainte rupture est exprimée en MPa.

Toutes ces mesures de traction sont effectuées dans les conditions normales de température (23$\pm$2°C) et d'hygrométrie (50$\pm$5% d'humidité relative), selon la norme française NF T 40-101 (décembre 1979).

Les propriétés dynamiques G*(10%), G*(25%) et tan($\delta$)max à 60°C sont mesurées sur un viscoanalyseur (Metravib VA4000), selon la norme ASTM D 5992-96. On enregistre la réponse d'un échantillon de composition réticulée (éprouvette cylindrique de 4 mm d'épaisseur et de 400 $mm^2$ de section), soumis à une sollicitation sinusoïdale en cisaillement simple alterné, à la fréquence de 10Hz, dans les conditions définies de température par exemple à 60°C selon la norme ASTM D 1349-99, ou selon les cas à une température différente. On effectue un balayage en amplitude de déformation de 0,1 à 50% (cycle aller), puis de 50% à 1% (cycle retour). Les résultats exploités sont le module complexe de cisaillement dynamique G* et le facteur de perte tan($\delta$). Pour le cycle retour, on indique la valeur maximale de tan($\delta$) observée, noté tan($\delta$)max, ainsi que le module complexe de cisaillement dynamique G* à 10% ou 25% de déformation, à 60°C.

*Rhéométrie*

Les mesures sont effectuées à une température donnée (par exemple 140°C) avec un rhéomètre à chambre oscillante, selon la norme DIN 53529 - partie 3 (juin 1983). L'évolution du couple rhéométrique, $\Delta$Couple, en fonction du temps décrit l'évolution de la rigidification de la composition par suite de la réaction de vulcanisation. Les mesures sont traitées selon la norme DIN 53529 - partie 2 (mars 1983) : T0 est le délai d'induction (exprimé en min), c'est-à-dire le temps nécessaire au début de la réaction de réticulation ; t$\alpha$ (par exemple t95) est le temps nécessaire pour atteindre une conversion de $\alpha$% (par exemple 95%), c'est-à-dire $\alpha$% (par exemple 95%) de l'écart entre les couples minimum et maximum. Plus la valeur de t$\alpha$ est faible, plus la composition aura réticulé rapidement, c'est-à-dire que la cuisson aura été rapide.

III-2 Préparation des compositions

On procède pour les essais qui suivent de la manière suivante : on introduit dans un mélangeur à palettes (taux de remplissage final : environ 70% en volume), dont la température initiale de cuve est d'environ 90°C, successivement, l'élastomère, la charge renforçante, l'acrylate polyfonctionnel ainsi que les divers autres ingrédients à l'exception du système de réticulation. On conduit alors un travail thermomécanique (phase non-productive) en une étape, qui dure au total environ 3 à 4 min, jusqu'à atteindre une température maximale de « tombée » de 150°C.

On récupère le mélange ainsi obtenu, on le refroidit puis on incorpore le système de réticulation (peroxyde ou soufre selon le cas), sur un mélangeur (homo-finisseur) à 23°C ou 50°C respectivement, en mélangeant le tout (phase productive) dans un outil à cylindre pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé.

III-3 Essais de compositions de caoutchouc

*III-3.1 Effet de la nature du système de réticulation*

Les exemples ont été réalisés afin de comparer notamment l'effet de dérivés d'acrylate conformes à l'invention (composition C1) à une composition témoin (T1) qui diffère des compositions conformes à l'invention par la nature du système de réticulation, et une composition témoin (T2) qui diffère des compositions conformes à l'invention que par l'absence de dérivé d'acrylate, ainsi qu'à une composition témoin (T3) qui diffère uniquement par la nature du dérivé d'acrylate polyfonctionnel. Ces compositions de caoutchouc ont été préparées comme indiqué au point III-2 ci-dessus. Leurs formulations (en pce) et leurs propriétés ont été résumées dans le Tableau 1 ci-après.

Dans les compositions T3 et C1, la quantité de dérivé d'acrylate polyfonctionnel a été ajustée de manière à ce que les compositions présente un taux molaire de fonction (méth)acrylate constant.

Les résultats de G*25% à 60°C, M300 et tan(δ)max sont présentés en « base 100 » par rapport à la composition témoin T1. Pour les valeurs de G*25% à 60°C et M300, plus la valeur est élevée, plus le résultat est amélioré. Par ailleurs, plus la valeur plus de tan(δ)max à 60°C base 100 est basse, plus la composition aura une hystérèse faible et donc une résistance au roulement améliorée.

Tableau 1

| | **T1** | **T2** | **T3** | **C1** |
|---|---|---|---|---|
| EBR (1) | 100 | 100 | 100 | 100 |
| N234 (2) | 40 | 40 | 40 | 40 |
| Peroxyde (3) | - | 4 | 4 | 4 |
| HDDA (4) | - | - | 10.2 | - |
| DPPA (5) | - | - | - | 10.5 |
| Soufre | 1 | - | - | - |
| CBS (6) | 1 | - | - | - |
| ZnO (7) | 2.5 | - | - | - |
| Acide stéarique (8) | 1 | - | - | - |
| | | | | |
| t95 à 140 °C (min) | 55 | 23 | 29 | 22 |
| G* 25% à 60°C | 100 | 122 | 124 | 150 |
| Tan(δ) max 60°C | 100 | 95 | 74 | 79 |

(suite)

| | T1 | T2 | T3 | C1 |
|---|---|---|---|---|
| M300 | 100 | 85 | 253 | 308 |

(1) Copolymère éthylène-butadiène à 80% molaire de motifs éthylénique préparé selon un procédé de polymérisation d'éthylène et de butadiène conforme à l'exemple 4-2 du brevet EP 1954 705 B1 au nom des Demanderesses, le temps de polymérisation étant ajusté de manière à obtenir une masse molaire Mn = 153 000 g/mol avec un indice de polydispersité égal à 1.9
(2) Noir de carbone N234 (dénomination selon la norme ASTM D-1765)
(3) 1,1-bis(t-butylperoxy)-3,3,5-triméthylcyclohexane (« Luperox 231 » de la société Arkema)
(4) Hexanediol diacrylate (« SR238 » de la société Sigma-Aldrich)
(5) Dipentaerythritol pentaacrylate (« SR399 » de la société Sigma-Aldrich)
(6) N-cyclohexyl-2-benzothiazyle sulfénamide (« Santocure CBS » de la société Flexsys)
(7) Oxyde de zinc (grade industriel - société Umicore)
(8) Stéarine (« Pristerene 4931 » de la société Uniqema)

Ces résultats montrent que la substitution d'un système de vulcanisation classique par un système de réticulation à base de peroxyde et d'un dérivé d'acrylate conforme à l'invention permet d'accélérer la vitesse de réticulation, d'augmenter la rigidité et d'améliorer le renforcement de la composition, tout en améliorant la résistance au roulement.

*III-3.2 Effet de la nature de la matrice élastomérique*

D'autres exemples ont été réalisés afin de comparer l'effet de la substitution d'une matrice élastomérique à base de caoutchouc naturel et de polybutadiène par un copolymère comprenant des unités éthylène et des unités diéniques conjuguées.

Une composition témoin T4 a ainsi été préparée comme indiqué au point III-2 ci-dessus afin de la comparer à la composition conforme à l'invention (C1) ci-dessus. Leurs formulations (en pce) et leurs propriétés ont été résumées dans le Tableau 2 ci-après.

Les résultats de CR et G*25% à 60°C sont présentés en « base 100 » par rapport à la composition témoin T4. Plus la valeur est élevée, plus le résultat est amélioré.

Tableau 2

| | T4 | C1 |
|---|---|---|
| NR (8) | 75 | - |
| BR (9) | 25 | - |
| EBR (1) | - | 100 |
| N234 (2) | 40 | 40 |
| Peroxyde (3) | 4 | 4 |
| DPPA (4) | - | 10,5 |
| | | |
| CR | 100 | 168 |
| G*25% à 60°C | 100 | 162 |

(1) à (4) : voirTableau 1 ci-dessus
(8) Caoutchouc naturel
(9) Polybutadiène (Nd) avec 0,7% de 1-2 ; 1,7% de trans 1-4 ; 98% de cis 1-4 (Tg = - 105°C) (« Buna CB24 » de la société Arlanxeo)

Ces résultats montrent que l'utilisation de dérivés d'acrylate conformes à l'invention, dans une matrice élastomérique à base d'un copolymère comprenant des unités éthylène et des unités diéniques conjuguées, et un système de réticulation à base de peroxyde, permet d'améliorer les propriétés mécaniques et la rigidité par rapport à une composition comprenant une matrice élastomérique conventionnelle.

## Revendications

1. Pneumatique comprenant une composition de caoutchouc à base de :

   - une matrice élastomérique comprenant majoritairement un copolymère statistique comprenant des unités éthylène et des unités diéniques conjuguées, la fraction molaire des unités éthylène dans le copolymère étant comprise dans un domaine allant de 50% à 95%,
   - au moins un peroxyde, et
   - au moins un dérivé d'acrylate polyfonctionnel de formule (I)

   $$[X]_p\,A \qquad (I)$$

   dans laquelle :

   o A représente un groupement hydrocarboné en $C_4$-$C_{30}$, linéaire, ramifié ou cyclique, interrompu et/ou substitué par un ou plusieurs hétéroatomes,
   o A comprenant p valences libres, p ayant une valeur allant de 2 à 6,
   o [X]p correspond à un radical de formule (II) :

   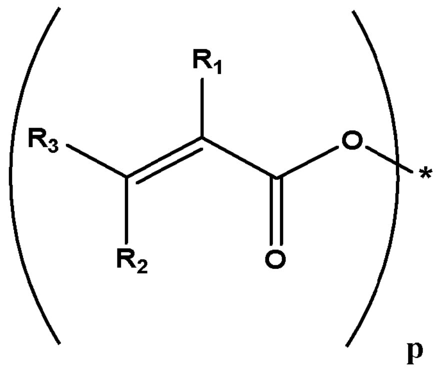

   (II)

   dans laquelle,

   - $R_1$, $R_2$ et $R_3$ représentent indépendamment un atome d'hydrogène ou un groupement hydrocarboné en $C_1$-$C_8$ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, $R_2$ et $R_3$ pouvant former ensemble un cycle non aromatique,
   - (*) représente le point d'attachement du radical de formule (II) à A,

   o étant entendu que les 2 à 6 radicaux X sont identiques ou différents.

2. Pneumatique selon la revendication 1, dans lequel les unités diéniques conjuguées sont choisies dans le groupe constitué par les unités butadiènes, les unités isoprènes et les mélanges de ces unités diéniques conjuguées, de préférence les unités diéniques conjuguées sont des unités butadiène.

3. Pneumatique selon l'une quelconque des revendications précédentes, dans lequel la fraction molaire des unités éthylène dans le copolymère statistique comprenant des unités éthylène et des unités diéniques conjuguées est comprise dans un domaine allant de 60% à 90%, de préférence de 65% à 85%.

4. Pneumatique selon l'une quelconque des revendications précédentes, dans lequel $R_1$, $R_2$ et $R_3$ représentent chacun un atome d'hydrogène.

5. Pneumatique selon l'une quelconque des revendications précédentes, dans lequel le ou les hétéroatomes de A sont choisis dans le groupe constitué par les atomes d'oxygène, de soufre, d'azote, de silicium, de phosphore et leurs combinaisons, de préférence dans le groupe constitué par atomes d'oxygène et de soufre.

**6.** Pneumatique selon l'une quelconque des revendications précédentes, dans lequel A représente un groupement hydrocarboné en $C_4$-$C_{30}$, linéaire, ramifié ou cyclique, interrompu et/ou substitué par un ou plusieurs atomes d'oxygène et/ou de soufre, de préférence interrompu et/ou substitué par un ou plusieurs atomes d'oxygène.

**7.** Pneumatique selon l'une quelconque des revendications 1 à 5, dans lequel A représente un groupement hydrocarboné en $C_4$-$C_{30}$, linéaire, ramifié ou cyclique, interrompu par un ou plusieurs atomes d'oxygène et/ou de soufre, de préférence interrompu par un ou plusieurs atomes d'oxygène.

**8.** Pneumatique selon l'une quelconque des revendications 1 à 3, dans lequel le dérivé d'acrylate polyfonctionnel de formule (I) est choisi dans le groupe constitué par le penta(méth)acrylate de dipentaerythriol, l'hexa(méth)acylate de dipentaerythriol, le di(méth)acrylate de diéthylène glycol, le di(méth)acrylate de dipropylène glycol, le di(méth)acrylate d'hexanediol éthoxylé, le di(méth)acrylate d'hexanediol propoxylé, le tri(méth)acrylate de triméthylpropane éthoxylé, le tri(méth)acrylate de triméthylpropane propoxylé, le tétra(méth)acrylate de pentaerythritol éthoxylé, le tétra(méth)acrylate de pentaerythritol propoxylé, le di(méth)acrylate de bisphénol A éthoxylé, le di(méth)acrylate de bisphénol A propoxylé, le di(méth)acrylate d'hexanediol glycol éthoxylé, le di(méth)acrylate d'hexanediol glycol propoxylé, le di(méth)acrylate de neopentyl glycol éthoxylé, le di(méth)acrylate de neopentyl glycol propoxylé, le tri(méth)acrylate de glycérol éthoxylé, le tri(méth)acrylate de glycérol propoxylé, le tri(méth)acrylate de triméthylolpropane éthoxylé, le tri(méth)acrylate de triméthylolpropane propoxylé, le di(méth)acrylate d'esterdiol, le tri(méth)acrylate de tri(2-hydroxy éthyl)isocyanurate, l'hydroxypivalyl hydroxypivalate bis[6-(acryloyloxy)hexanoate] et leurs mélanges.

**9.** Pneumatique selon l'une quelconque des revendications précédentes, dans lequel la quantité de dérivé d'acrylate polyfonctionnel de formule (I) dans la composition est comprise dans un domaine allant de 5 à 50 parties en poids pour cent parties en poids d'élastomère, pce, de préférence de 5 à 30 pce.

**10.** Pneumatique selon l'une quelconque des revendications précédentes, dans lequel le peroxyde dans la composition est un peroxyde organique.

**11.** Pneumatique selon l'une quelconque des revendications précédentes, dans lequel la quantité du peroxyde dans la composition est comprise dans un domaine allant de 0,1 à 10 pce, de 0,5 à 5 pce, de préférence encore de 1 à 4 pce.

**12.** Pneumatique selon l'une quelconque des revendications précédentes, dans lequel la composition comprend de 5 à 65 pce, de préférence de 10 à 55 pce, de charge renforçante.

**13.** Pneumatique selon la revendication 12, dans lequel la charge renforçante comprend un noir de carbone, une silice, ou l'un de leurs mélanges, et de préférence la charge renforçante comprend majoritairement du noir de carbone.

**14.** Pneumatique selon l'une des revendications précédentes, dans lequel la composition définie dans l'une quelconque des revendications 1 à 13 est présente dans la bande de roulement et/ou au moins une couche interne dudit pneumatique.

**15.** Pneumatique selon la revendication 14, dans lequel la couche interne est choisie dans le groupe constitué par les nappes carcasse, les nappes sommet, les bourrages-tringle, les pieds sommets, les couches de découplage, les gommes de bordure, les gommes de bourrage, la sous-couche de bande de roulement et les combinaisons de ces couches internes.

**Patentansprüche**

**1.** Reifen, umfassend eine Kautschukzusammensetzung auf Basis von mindestens:

- einer elastomeren Matrix, die hauptsächlich ein statistisches Copolymer umfasst, das Ethyleneinheiten und konjugierte Dieneinheiten umfasst, wobei der molare Anteil der Ethyleneinheiten in dem Copolymer in einem Bereich von 50 % bis 95 % liegt,
- mindestens einem Peroxid und
- mindestens einem polyfunktionellen Acrylatderivat der Formel (I)

$$[X]_p A \qquad (I),$$

in der:

- A für eine lineare, verzweigte oder cyclische $C_4$-$C_{30}$-Kohlenwasserstoffgruppe, die durch ein oder mehrere Heteroatome unterbrochen und/oder substituiert ist, steht,
- A p freie Valenzen umfasst, wobei p einen Wert im Bereich von 2 bis 6 hat,
- [X]p einem Rest der Formel (II) entspricht:

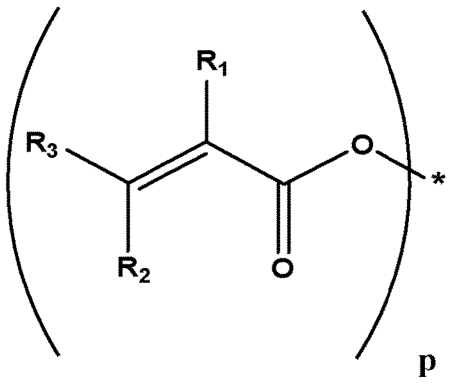

(II),

in der:

- $R_1$, $R_2$ und $R_3$ unabhängig für ein Wasserstoffatom oder eine $C_1$-$C_8$-Kohlenwasserstoffgruppe aus der Gruppe bestehend aus linearen, verzweigten oder cyclischen Alkylgruppen, Alkylarylgruppen, Arylgruppen und Aralkylgruppen, die gegebenenfalls durch ein oder mehrere Heteroatome unterbrochen sind, stehen, wobei $R_2$ und $R_3$ zusammen einen nichtaromatischen Ring bilden können,
- (*) für den Anbindungspunkt des Rests der Formel (II) an A steht,

- wobei es sich versteht, dass die 2 bis 6 Reste X gleich oder verschieden sind.

**2.** Reifen nach Anspruch 1, wobei die konjugierten Dieneinheiten aus der Gruppe bestehend aus Butadieneinheiten, Isopreneinheiten und Mischungen dieser konjugierten Dieneinheiten ausgewählt sind und es sich bei den konjugierten Dieneinheiten vorzugsweise um Butadieneinheiten handelt.

**3.** Reifen nach einem der vorhergehenden Ansprüche, wobei der molare Anteil der Ethyleneinheiten in dem Copolymer, das Ethyleneinheiten und konjugierte Dieneinheiten umfasst, in einem Bereich von 60 % bis 90 %, vorzugsweise von 65 % bis 85 %, liegt.

**4.** Reifen nach einem der vorhergehenden Ansprüche, wobei $R_1$, $R_2$ und $R_3$ jeweils für ein Wasserstoffatom stehen.

**5.** Reifen nach einem der vorhergehenden Ansprüche, wobei das Heteroatom bzw. die Heteroatome von A aus der Gruppe bestehend aus Sauerstoff-, Schwefel-, Stickstoff-, Silicium- und Phosphoratomen und Kombinationen davon, vorzugsweise aus der Gruppe bestehend aus Sauerstoff- und Schwefelatomen, ausgewählt ist bzw. sind.

**6.** Reifen nach einem der vorhergehenden Ansprüche, wobei A für eine lineare, verzweigte oder cyclische $C_4$-$C_{30}$-Kohlenwasserstoffgruppe, die durch ein oder mehrere Sauerstoff- und/oder Schwefelatome unterbrochen und/oder substituiert ist, vorzugsweise durch ein oder mehrere Sauerstoffatome unterbrochen und/oder substituiert ist, steht.

**7.** Reifen nach einem der Ansprüche 1 bis 5, wobei A für eine lineare, verzweigte oder cyclische $C_4$-$C_{30}$-Kohlenwasserstoffgruppe, die durch ein oder mehrere Sauerstoff- und/oder Schwefelatome unterbrochen ist, vorzugsweise durch ein oder mehrere Sauerstoffatome unterbrochen ist, steht.

**8.** Reifen nach einem der Ansprüche 1 bis 3, wobei das polyfunktionelle Acrylatderivat der Formel (I) aus der Gruppe bestehend aus Dipentaerythritolpenta(meth)acrylat, Dipentaerythritolhexa(meth)acrylat, Diethylenglykoldi(meth)acrylat, Dipropyleneglykoldi(meth)acrylat, ethoxyliertem Hexandioldi(meth)acrylat, propoxyliertem Hexandioldi(meth)acrylat, ethoxyliertem Trimethylpropantri(meth)acrylat, propoxyliertem Trimethylpropantri(meth)acrylat,

ethoxyliertem Pentaerythritoltetra(meth)acrylat, propoxyliertem Pentaerythritoltetra(meth)acrylat, ethoxyliertem Bisphenol-A-di(meth)acrylat, propoxyliertem Bisphenol-A-di(meth)acrylat, ethoxyliertem Hexandiolglykoldi(meth)acrylat, propoxyliertem Hexandiolglykoldi(meth)acrylat, ethoxyliertem Neopentylglykoldi(meth)acrylat, propoxyliertem Neopentylglykoldi(meth)acrylat, ethoxyliertem Glycerintri(meth)acrylat, propoxyliertem Glycerintri(meth)acrylat, ethoxyliertem Trimethylolpropantri(meth)acrylat, propoxyliertem Trimethylolpropantri(meth)acrylat, Esterdioldi(meth)acrylat, Tri(2-hydroxyethyl)isocyanurattri(meth)acrylat, Hydroxypivalylhydroxypivalatbis[6-(acryloyloxy)hexanoat] und Mischungen davon ausgewählt ist.

**9.** Reifen nach einem der vorhergehenden Ansprüche, wobei die Menge an polyfunktionellem Acrylatderivat der Formel (I) in der Zusammensetzung in einem Bereich von 5 bis 50 Gewichtsteilen pro hundert Gewichtsteile Elastomer, phe, vorzugsweise von 5 bis 30 phe, liegt.

**10.** Reifen nach einem der vorhergehenden Ansprüche, wobei es sich bei dem Peroxid in der Zusammensetzung um ein organisches Peroxid handelt.

**11.** Reifen nach einem der vorhergehenden Ansprüche, wobei die Menge an Peroxid in der Zusammensetzung in einem Bereich von 0,1 bis 10 phe, von 0,5 bis 5 phe, weiter bevorzugt von 1 bis 4 phe, liegt.

**12.** Reifen nach einem der vorhergehenden Ansprüche, wobei die Zusammensetzung 5 bis 65 phe, vorzugsweise 10 bis 55 phe, verstärkenden Füllstoff umfasst.

**13.** Reifen nach Anspruch 12, wobei der verstärkende Füllstoff einen Ruß, eine Kieselsäure oder eine Mischung davon umfasst und der verstärkende Füllstoff vorzugsweise hauptsächlich Ruß umfasst.

**14.** Reifen nach einem der vorhergehenden Ansprüche, wobei die Zusammensetzung gemäß einem der Ansprüche 1 bis 13 in der Lauffläche und/oder mindestens einer Innenschicht des Reifens vorliegt.

**15.** Reifen nach Anspruch 14, wobei die Innenschicht aus der Gruppe bestehend aus Karkasslagen, Zwischenbauten, Kernreitern, Scheitelfüßen, Entkopplungsschichten, Randgummis, Dichtungsgummis, der Unterschicht der Lauffläche und Kombinationen dieser Innenschichten ausgewählt ist.

## Claims

**1.** Tyre comprising a rubber composition based on:

- an elastomeric matrix comprising predominantly a random copolymer comprising ethylene units and conjugated diene units, the mole fraction of the ethylene units in the copolymer being within a range extending from 50% to 95%,
- at least one peroxide, and
- at least one polyfunctional acrylate derivative of formula (I)

$$[X]_p\ A \qquad (I)$$

in which:

o A represents a linear, branched or cyclic $C_4$-$C_{30}$ hydrocarbon group, interrupted and/or substituted by one or more heteroatoms,
o A comprising p free valences, p having a value ranging from 2 to 6,
o [X]p corresponds to a radical of formula (II):

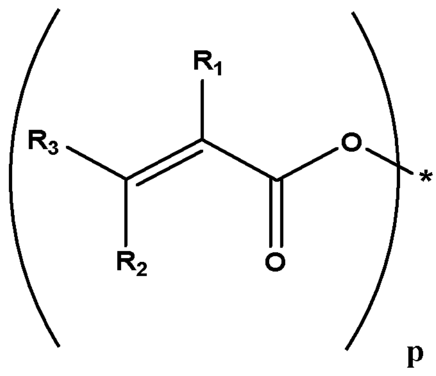

(II)

in which,

- $R_1$, $R_2$ and $R_3$ independently represent a hydrogen atom or a $C_1$-$C_8$ hydrocarbon group selected from the group consisting of linear, branched or cyclic alkyl groups, alkylaryl groups, aryl groups and aralkyls, and which are optionally interrupted by one or more heteroatoms, it being possible for $R_2$ and $R_3$ together to form a non-aromatic ring,
- (*) represents the point of attachment of the radical of formula (II) to A,

o it being understood that the 2 to 6 X radicals are identical or different.

**2.** Tyre according to Claim 1, in which the conjugated diene units are selected from the group consisting of butadiene units, isoprene units and mixtures of these conjugated diene units; preferably, the conjugated diene units are butadiene units.

**3.** Tyre according to any one of the preceding claims, in which the mole fraction of the ethylene units in the random copolymer comprising ethylene units and conjugated diene units is within a range extending from 60% to 90%, preferably from 65% to 85%.

**4.** Tyre according to any one of the preceding claims, in which $R_1$, $R_2$ and $R_3$ each represent a hydrogen atom.

**5.** Tyre according to any one of the preceding claims, in which the heteroatom(s) of A are selected from the group consisting of oxygen, sulfur, nitrogen, silicon and phosphorus atoms, and combinations thereof, preferably from the group consisting of oxygen and sulfur atoms.

**6.** Tyre according to any one of the preceding claims, in which A represents a linear, branched or cyclic $C_4$-$C_{30}$ hydrocarbon group, interrupted and/or substituted by one or more oxygen and/or sulfur atoms, preferably interrupted and/or substituted by one or more oxygen atoms.

**7.** Tyre according to any one of Claims 1 to 5, in which A represents a linear, branched or cyclic $C_4$-$C_{30}$ hydrocarbon group, interrupted by one or more oxygen and/or sulfur atoms, preferably interrupted by one or more oxygen atoms.

**8.** Tyre according to any one of Claims 1 to 3, in which the polyfunctional acrylate derivative of formula (I) is selected from the group consisting of dipentaerythritol penta(meth)acrylate, dipentaerythritol hexa(meth)acrylate, diethylene glycol di(meth)acrylate, dipropylene glycol di(meth)acrylate, ethoxylated hexanediol di(meth)acrylate, propoxylated hexanediol di(meth)acrylate, ethoxylated trimethylpropane tri(meth)acrylate, propoxylated trimethylpropane tri(meth)acrylate, ethoxylated pentaerythritol tetra(meth)acrylate, propoxylated pentaerythritol tetra(meth)acrylate, ethoxylated bisphenol A di(meth)acrylate, propoxylated bisphenol A di(meth)acrylate, ethoxylated hexanediol glycol di(meth)acrylate glycol, propoxylated hexanediol glycol di(meth)acrylate, ethoxylated neopentyl glycol di(meth)acrylate, propoxylated neopentyl glycol di(meth)acrylate, ethoxylated glyceryl tri(meth)acrylate, propoxylated glyceryl tri(meth)acrylate, ethoxylated trimethylolpropane tri(meth)acrylate, propoxylated trimethylolpropane tri(meth)acrylate, ester diol di(meth)acrylate, tri(2-hydroxyethyl) isocyanurate tri(meth)acrylate, hydroxypivalyl hydroxypivalate bis[6-(acryloyloxy)hexanoate, and mixtures thereof.

**9.** Tyre according to any one of the preceding claims, in which the amount of polyfunctional acrylate derivative of

formula (I) in the composition is within a range extending from 5 to 50 parts by weight per hundred parts by weight of elastomer, phr, preferably from 5 to 30 phr.

**10.** Tyre according to any one of the preceding claims, in which the peroxide in the composition is an organic peroxide.

**11.** Tyre according to any one of the preceding claims, in which the amount of peroxide in the composition is within a range extending from 0.1 to 10 phr, from 0.5 to 5 phr, more preferably from 1 to 4 phr.

**12.** Tyre according to any one of the preceding claims, in which the composition comprises from 5 to 65 phr, preferably from 10 to 55 phr, of reinforcing filler.

**13.** Tyre according to Claim 12, in which the reinforcing filler comprises a carbon black, silica, or a mixture thereof, and preferably the reinforcing filler mainly comprises carbon black.

**14.** Tyre according to one of the preceding claims, in which the composition defined in any one of Claims 1 to 13 is present in the tread and/or at least one internal layer of said tyre.

**15.** Tyre according to Claim 14, in which the internal layer is selected from the group consisting of carcass plies, crown plies, bead-wire fillings, crown feet, decoupling layers, edge rubbers, padding rubbers, the tread underlayer, and the combinations of these internal layers.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2016102480 A
- WO 2016102483 A
- EP 1092731 A
- EP 1554321 A
- EP 1656400 A
- EP 1829901 A
- EP 1954705 A
- EP 1957506 A
- FR 3045612
- FR 3045613
- WO 9736724 A2
- WO 9916600 A1
- WO 2006069792 A1
- WO 2006069793 A1
- WO 2008003434 A1
- WO 2008003435 A1
- WO 03016215 A1
- WO 03016387 A1
- WO 9928376 A2
- WO 0073372 A1
- WO 02053634 A1
- WO 2004003067 A1
- WO 2004056915 A2
- US 6610261 B1
- US 6747087 B2
- WO 0210269 A
- EP 0501227 A
- EP 0735088 A
- EP 0810258 A
- WO 0005300 A
- WO 0005301 A
- WO 2007054224 A
- EP 1954705 B1


### Littérature non-brevet citée dans la description


- **RUNAUER-EMMETT-TELLER.** *The Journal of the American Chemical Society,* Février 1938, vol. 60, 309
- **LLAURO M. F. ; MONNET C. ; BARBOTIN F. ; MONTEIL V. ; SPITZ R. ; BOISSON C.** Investigation of ethylene/butadiene copolymers microstructure by H and C NMR. *Macromolecules,* 2001, vol. 34, 6304-6311